# EUROPEAN PATENT APPLICATION

(11) **EP 2 405 212 A1**
(43) Date of publication of application: **11.01.2012**
(21) Application number: 10748589.8
(22) Date of filing: 04.02.2010
(51) Int. Cl.: F24J 2/24, F03G 6/00

(54) **SOLAR HEAT RECEIVER AND SOLAR THERMAL POWER GENERATING SYSTEM**

(30) Priority: 06.03.2009 JP 2009053466
(71) Applicant: Mitsubishi Heavy Industries, Ltd., Tokyo 108-8215 (JP)
(72) Inventor: MASADA, Junichiro, Takasago-shi Hyogo 676-8686 (JP); HADA, Satoshi, Takasago-shi Hyogo 676-8686 (JP); IIJIMA, Takayoshi, Takasago-shi Hyogo 676-8686 (JP)
(74) Representative: Henkel, Breuer & Partner
(86) International application number: PCT/JP2010/051577
(87) International publication number: WO 2010/100992

(57) **Abstract**

Provided is a solar heat receiver, which improves power generating efficiency in solar thermal power generation and has a reduced manufacturing cost and improved thermal shock resistance. A solar thermal power generating system using the solar heat receiver is also provided. The solar heat receiver which receives radiation of solar light and heats a fluid is provided with: a metal heat receiving section (72), which configures at least a channel wherein the fluid flows; and a heat-resistant coating layer (75), which is arranged at least on the surface of the heat receiving section (72) in a region irradiated with solar light and absorbs energy of the solar light.

## Description

### {Technical Field}

The present invention relates to solar thermal receivers and solar thermal power generation facilities.

### {Background Art}

Various types of power generation facilities utilizing solar heat have been conventionally proposed. For example, power generation facilities have been proposed in which fluid compressed by a compressor is heated by absorbing solar heat, the heated fluid is supplied to a turbine section to extract a rotary drive force, and a power generator is rotationally driven (for example, see Patent Literatures 1 and 2).

Since solar thermal receivers that make fluid absorb solar heat are required to make the fluid absorb heat from sunlight efficiently, various configurations have been proposed (for example, see Patent Literatures 3 and 4).
In Patent Literatures 3 and 4, in order to improve solar heat absorption efficiency, a layer made of a highly endothermic material is disposed in an area to be irradiated with sunlight.

For example, a solar thermal receiver is also known in which porous ceramic is disposed in a silica-glass tube, and air passes through the porous ceramic.
In this solar thermal receiver, the heat of sunlight is first absorbed into the porous ceramic. Then, when air passes through the porous ceramic, the heat of the porous ceramic is absorbed into the air, thus heating the air.

### {Citation List}

### {Patent Literature}

{PTL 1}
   PCT International Publication No. WO 2006-025449 Pamphlet
{PTL 2}
   United States Patent No. 4268319
{PTL 3}
   European Patent Application, Publication No. 1746363 {PTL 4}
The Publication of Japanese Patent No. 3331518

### {Summary of Invention}

### {Technical Problem}

In order to improve power generation efficiency in solar thermal power generation, it is necessary to more efficiently heat fluid to a high temperature in the solar thermal receiver.
However, merely with a method of improving the solar heat absorption efficiency, there is an upper limit to the absorption efficiency, and thus there is also an upper limit to the improvement in fluid heating efficiency, leading to a problem of difficulty in further improving the power generation efficiency.

When a solar thermal receiver is made of porous ceramic etc., there is a problem in that it is easily damaged because the porous ceramic has low thermal shock resistance, and the cost is high.
Further, there is a problem in that the production cost is high when the solar thermal receiver is made of porous ceramic etc.

The present invention has been made to solve the above-described problems, and an object thereof is to provide a solar thermal receiver that improves power generation efficiency in solar thermal power generation, that reduces the production cost, that enhances the resistance to thermal shock caused by intermittent blocking of sunlight because of clouds, and that eliminates oxidative damage of the thermal receiver, and a solar thermal power generation facility using the solar thermal receiver.

### {Solution to Problem}

In order to achieve the above-described object, the present invention provides the following solutions.
A first aspect of the present invention is a solar thermal receiver that receives solar radiation to heat fluid, including: a heat-receiving section that is made of metal and that constitutes a flow path in which at least the fluid flows; and a coating layer that is disposed on at least a surface of an area of the heat-receiving section irradiated with the sunlight, that absorbs energy of the sunlight, and that has heat resistance.

According to the first aspect of the present invention, since the coating layer is provided, the temperature difference, in other words, the heat drop, between a surface irradiated with sunlight and a surface in contact with fluid can be increased. Therefore, the fluid can be efficiently heated to a high temperature.

Specifically, since the coating layer having a higher heat-resistant temperature than other members made of metal etc. is provided, the surface irradiated with sunlight can be heated to a high temperature. As a result, it is possible to increase the above-described temperature difference to increase the heat flux density from the surface irradiated with sunlight to the surface in contact with fluid and to efficiently heat the fluid to a high temperature.

On the other hand, compared with a case where the coating layer is not provided, it is possible to suppress the heat resistance required for a member constituting the heat-receiving section. Therefore, the heat-receiving section can be formed using metal, for example, a heat-resistant alloy, which is highly resistant to thermal shock compared with porous ceramic etc.

Specifically, because the surface of the coating layer is irradiated with sunlight, the temperature is the highest thereat, and decreases therefrom in a contact surface between the coating layer and the heat-receiving section and a contact surface between the heat-receiving section and fluid in that order. Therefore, compared with a case where the coating layer is not provided and the surface irradiated with sunlight has an identical temperature, it is possible to reduce the temperature of the heat-receiving section, thereby suppressing the heat resistance required for a member constituting the heat-receiving section.

As the coating layer, examples thereof include a coating layer having a high thermal barrier property, such as a thermal barrier coating (hereinafter, referred to as "TBC"), which is provided by a spraying method or a vapor deposition method, on an M, Cr, A1, and Y metal-binding layer (M: Ni, Co, Fe) that has superior high-temperature oxidation resistance and structural stability than a heat-resistant alloy matrix consisting primarily of Ni, Co, or Fe, the metal-binding layer being formed on the matrix.
By using TBC endowed with the thermal barrier property, as a coating layer, as described above, it is possible to further increase the temperature difference between the surface of the coating layer irradiated with sunlight and the contact surface between the coating layer and the heat-receiving section and to increase the temperature difference between the surface irradiated with sunlight and the surface in contact with fluid.

In the above-described first aspect of the invention, it is preferable to have a configuration in which the coating layer be made of ceramic thermally sprayed on the heat-receiving section.
By doing so, a coating layer made of ceramic can easily formed.

In the above-described configuration, it is preferable that the ceramic be ZrO₂ ceramic obtained by stabilizing or partially stabilizing a solid solution of at least one of Sm₂O₃, MgO, CaO, and Y₂O₃.
In the above-described configuration, it is preferable that the ceramic be ZrO₂ ceramic obtained by partially stabilizing a solid solution of Y₂O₃.

By doing so, it is possible to form the coating layer that improves the absorption properties for absorbing energy of sunlight and that has high heat resistance, compared with metals. Further, compared with coating layers made of other materials, it is possible to increase the temperature difference between the surface of the coating layer irradiated with sunlight and the surface of the heat-receiving section that is in contact with fluid.

In the above-described first aspect, it is preferable that a heat-receiving section according to the above-described first aspect be a heat-receiving pipe having a flow path in which the fluid flows; a coating layer according to the above-described first aspect be disposed on an outer circumferential surface of the heat-receiving pipe; and the heat-receiving pipe have a light-incident part for guiding the sunlight to the inside thereof and be accommodated in a housing whose inner circumferential surface reflects the sunlight.

By doing so, sunlight guided to the inside of the housing is reflected at the inner circumferential surface of the housing, so that the heat-receiving pipe is irradiated with the sunlight from all directions. Therefore, fluid can be efficiently heated compared with a case where the heat-receiving pipe is irradiated with sunlight only from a predetermined direction. Further, the pipe experiences neither cracking nor peeling caused by the difference in linear expansion due to the temperature difference from a portion of the heat-receiving pipe that is not directly irradiated with sunlight.
On the other hand, since the heat-receiving pipe is irradiated with sunlight from all directions, it is possible to suppress the occurrence of a temperature difference along the circumferential direction of the heat-receiving pipe and to suppress damage to the heat-receiving pipe.

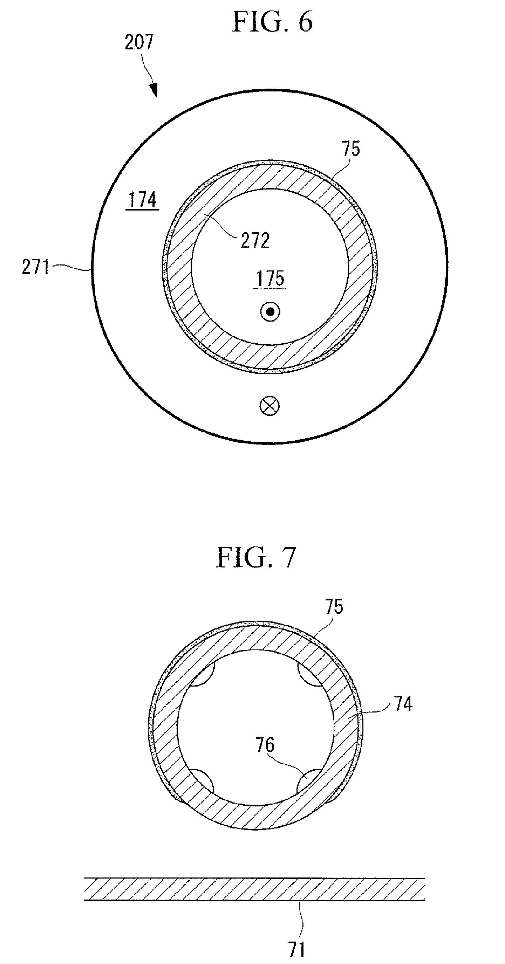

In a case where a large number of heat-receiving pipes are provided and thus less light is reflected from a rear surface, the temperature of a surface of the pipe that is directly irradiated with sunlight is approximately 900 °C, and the temperature of a rear surface of the pipe is approximately 600 °C. If this temperature difference occurs every day, cracking is likely to occur on the pipe due to thermal fatigue, and therefore a coating layer may be provided on a portion irradiated with sunlight, as shown in FIG. 7.

In the above-described first aspect, it is preferable that a transparent housing that accommodates a heat-receiving section according to the above-described first aspect and through which the sunlight passes be provided; a coating layer according to the above-described first aspect be disposed on at least a surface of the heat-receiving section that faces the transparent housing; the flow path have a first flow path in which the fluid flows, between the heat-receiving section and the transparent housing, and a second flow path in which the fluid flows, at an opposite side of the heat-receiving section from the first flow path; and the fluid flow in the first flow path and the second flow path.

By doing so, sunlight passing through the transparent housing irradiates the coating layer to heat it. Fluid flowing in the first flow path adjacent to the coating layer is heated by absorbing the heat of the coating layer.
On the other hand, the heat of the coating layer is transferred to the heat-receiving section to heat the heat-receiving section. The fluid flowing in the second flow path adjacent to the heat-receiving section is further heated by absorbing the heat of the heat-receiving section. Therefore, the fluid can be efficiently heated.

For example, since fluid flows in the first flow path and the second flow path in that order, it is possible to heat the fluid more efficiently than in a case where it flows in reverse order.
Specifically, the fluid is immediately heated by absorbing the heat from the heated coating layer while flowing in the first flow path, and is further heated by absorbing the heat from the heat-receiving section, which has a lower temperature than the coating layer but has a higher temperature than the fluid, while flowing in the second flow path. In this way, the fluid is heated in two steps, thereby efficiently heating the fluid.

A second aspect of the present invention is a solar thermal power generation facility including: a reflecting section that reflects sunlight; a compressor that compresses fluid; a solar thermal receiver according to one of the solar thermal receivers of the above-described first aspect that receives the sunlight reflected by the reflecting section to heat the fluid compressed by the compressor; a turbine section that extracts a rotary drive force from the fluid heated by the solar thermal receiver; and a power generator that is rotationally driven by the turbine section.

According to the second aspect of the present invention, since the solar thermal receiver according to the first aspect is provided, it is possible to improve power generation efficiency in solar thermal power generation, to reduce the production cost, and to enhance the thermal shock resistance.

### {Advantageous Effects of Invention}

According to the solar thermal receiver of the first aspect of the present invention and the solar thermal power generation facility of the second aspect thereof, because a coating layer having a thermal barrier property is provided, an advantage is afforded in that it is possible to improve power generation efficiency in solar thermal power generation, to reduce the production cost, and to enhance the thermal shock resistance.

### {Brief Description of Drawings}

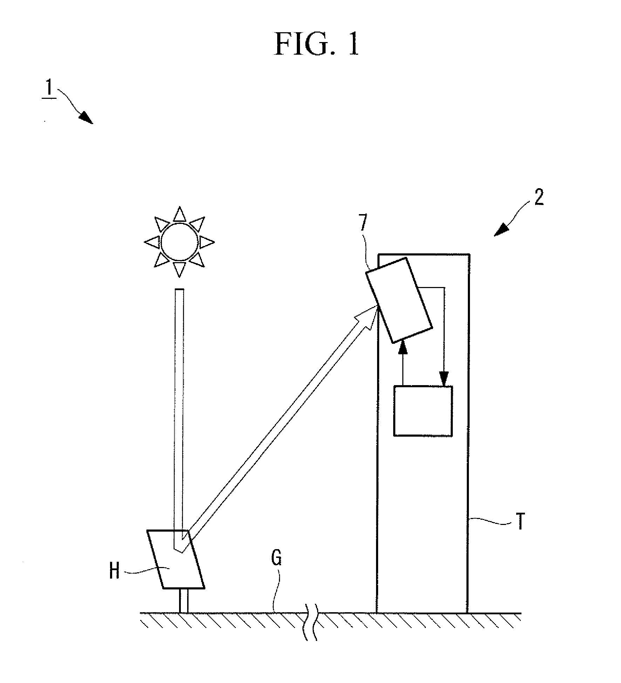

{Fig. 1}
   FIG. 1 is a schematic diagram for explaining, in outline, a solar thermal power generation facility according to a first embodiment of the present invention.
{Fig.2}
   FIG. 2 is a schematic diagram for explaining the configuration of a power generating section shown in FIG. 1.
{Fig. 3}
   FIG. 3 is a schematic diagram for explaining the configuration of a thermal receiver shown in FIG. 2.
{Fig. 4}
   FIG. 4 is a sectional view for explaining the configuration of a pipe shown in FIG. 3.
{Fig. 5}
   FIG. 5 is a schematic diagram for explaining the configuration of a thermal receiver in a solar thermal power generation facility according to a second embodiment of the present invention.
{Fig. 6}
   FIG. 6 is a sectional view for explaining another embodiment of the thermal receiver shown in FIG. 5.
{Fig.7}
   FIG. 7 is a sectional view for explaining one modification of the embodiment of FIG. 4.

### {Description of Embodiments}

A culturing processing apparatus and an automatic culturing apparatus according to one embodiment of the invention will be described with reference to FIGS. 1 to 6.

### First Embodiment

A solar thermal power generation facility according to a first embodiment of the present invention will be described below with reference to FIGS. 1 to 4.
FIG. 1 is a schematic diagram for explaining, in outline, the solar thermal power generation facility according to this embodiment.
As shown in FIG. 1, a solar thermal power generation facility 1 converts energy of sunlight into heat (solar heat) and generates power by utilizing the heat. In this embodiment, a description will be given of the solar thermal power generation facility 1 that is a so-called solar thermal gas turbine obtained when a configuration in which a power generator 5 is driven by using a gas turbine is combined with a configuration in which power is generated by utilizing solar heat.

Note that the solar thermal power generation facility 1 may be of the solar thermal gas turbine type, as described above, or may be another type using a steam turbine or the like; the type thereof is not particularly limited.

As shown in FIG. 1, the solar thermal power generation facility 1 includes a tower T, reflecting mirrors (reflecting sections) H, and a power generating section 2.

As shown in FIG. 1, the tower T extends upward from the ground G and collects sunlight reflected at the reflecting mirrors H.
A thermal receiver 7 of the power generating section 2, to be described later, is disposed at a portion in the tower T where sunlight is collected, for example, at the end of the tower T.

FIG. 1 shows a configuration in which the whole of the power generating section 2 is disposed in the tower T; however, it is only necessary to dispose the thermal receiver 7 of the power generating section 2 at least at the portion in the tower T where sunlight is collected, and the configuration thereof is not particularly limited.

The reflecting mirrors H are disposed at a plurality of places around the tower T and reflect sunlight toward the tower T to collect the sunlight on the thermal receiver 7.
A heliostat or the like that controls the direction of a planner mirror in accordance with the movement of the sun to reflect sunlight toward a predetermined location can be used as each of the reflecting mirrors H; the type thereof is not particularly limited.

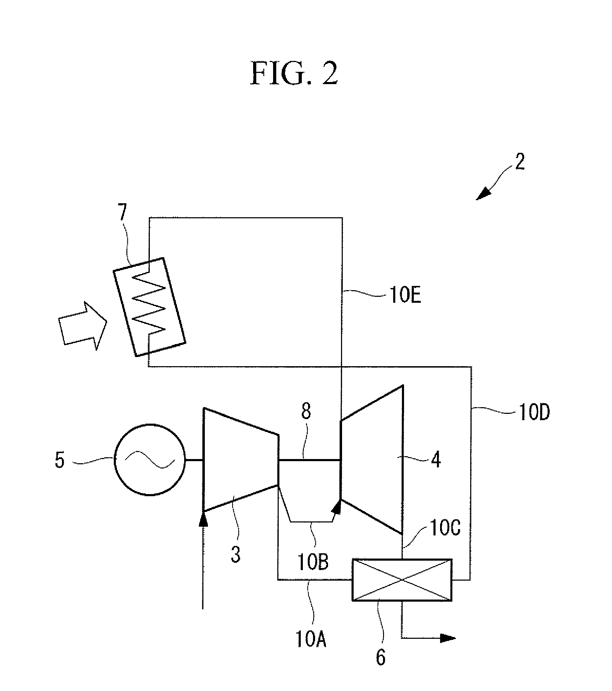

FIG. 2 is a schematic diagram for explaining the configuration of the power generating section shown in FIG. 1.
The power generating section 2 generates power by using energy of sunlight reflected by the reflecting mirrors H.
As shown in FIG. 2, the power generating section 2 includes a compressor 3, a turbine section 4, the power generator 5, a heat exchanger 6, and the thermal receiver (solar thermal receiver) 7.

As shown in FIG. 2, the compressor 3 constitutes the gas turbine together with the turbine section 4, the thermal receiver 7, etc. to drive the power generator 5 and compresses fluid such as air.
The compressor 3 is disposed around a rotary shaft 8 that receives a rotary drive force from the turbine section 4, so as to receive the rotary drive force.

Further, a pipe 10A and a pipe 10B in which compressed air flows are provided between the compressor 3 and the heat exchanger 6 and between the compressor 3 and the turbine section 4, respectively.

Note that a known axial flow compressor, a known centrifugal compressor, or the like can be used as the compressor 3; the type thereof is not particularly limited.

As shown in FIG. 2, the turbine section 4 is supplied with heated air from the thermal receiver 7 and converts heat energy etc. of the air into a rotary drive force. The turbine section 4 is disposed around the rotary shaft 8 so as to transfer the rotary drive force thereto.

Further, a pipe 10C in which air discharged from the turbine section 4 flows is provided between the turbine section 4 and the heat exchanger 6.
Note that a known turbine section can be used as the turbine section 4; the type thereof is not particularly limited.

As shown in FIG. 2, the power generator 5 is rotationally driven by the rotary shaft 8 to generate power.
Note that a known power generator can be used as the power generator 5; the type thereof is not particularly limited.

As shown in FIG. 2, the heat exchanger 6 causes air that has been compressed and increased in temperature by the compressor 3 to further absorb the heat of the air discharged from the turbine section 4.
A pipe 10D in which the compressed air heated by the heat exchanger 6 flows is provided between the heat exchanger 6 and the thermal receiver 7.
Note that a known heat exchanger can be used as the heat exchanger 6; the type thereof is not particularly limited.

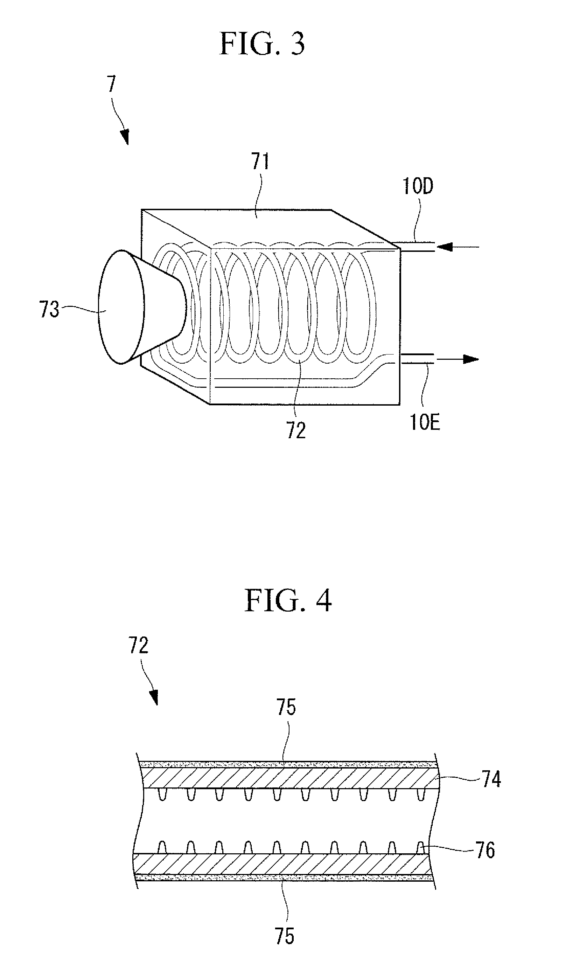

FIG. 3 is a schematic diagram for explaining the configuration of the thermal receiver shown in FIG. 2.
As shown in FIG. 1, the thermal receiver 7 is disposed at a location on the tower T where sunlight is collected, converts the energy of irradiating sunlight into heat, and heats air.
As shown in FIGS. 2 and 3, the thermal receiver 7 includes a housing 71 and a heat-receiving pipe (heat-receiving section) 72.

As shown in FIG. 3, the housing 71 forms the outer shape of the thermal receiver 7 and accommodates the heat-receiving pipe 72.
The housing 71 has a light-incident part 73 at an area irradiated with sunlight. Further, the inner surfaces of the housing 71 are formed to have mirror surfaces for reflecting the sunlight introduced from the light-incident part 73.
Note that the housing 71 may have a cubic shape, as shown in FIG. 3, or may have another shape; the shape thereof is not particularly limited.

As shown in FIG. 3, the light-incident part 73 guides sunlight to the inside of the housing 71.
The light-incident part 73 is disposed on a surface of the housing 71 irradiated with sunlight and is a member formed in an approximately conical shape whose diameter expands from the housing 71 in a direction from which the sunlight is radiated. The inner circumferential surface of the light-incident part 73, formed in the approximately conical shape, is formed to have a mirror surface for reflecting sunlight.

A connecting part between the housing 71 and the light-incident part 73 is configured such that sunlight passes therethrough, and the sunlight irradiating the inside of the light-incident part 73 is guided into the housing 71.
Note that a known structure can be used for the light-incident part 73; the structure thereof is not particularly limited.

As shown in FIGS. 2 and 3, the heat-receiving pipe 72 converts energy of the sunlight into heat and heats air.
As shown in FIG. 3, the heat-receiving pipe 72 is disposed inside the housing 71 in a spiral form, and the heat-receiving pipe 72 disposed in a spiral form is disposed with space between each spiral.

FIG. 4 is a sectional view for explaining the configuration of the pipe shown in FIG. 3.
As shown in FIG. 4, the heat-receiving pipe 72 includes a pipe main body (heat-receiving section) 74 formed of a heat-resistant alloy in a cylindrical shape, a coating layer 75 formed on the outer circumferential surface of the pipe main body 74, and turbulators 76 disposed inside the pipe main body 74.

As shown in FIG. 4, the pipe main body 74 is formed of a heat-resistant alloy in a cylindrical shape, and air flows therein.
Known alloy can be used as the heat-resistant alloy forming the pipe main body 74; the type thereof is not particularly limited.

As shown in FIG. 4, the coating layer 75 is provided on the outer circumferential surface of the pipe main body 74 and is TBC (Thermal Barrier Coating) formed by thermally spraying ZrO₂(Y₂O₃-ZrO₂) ceramic that is obtained by partially stabilizing a solid solution of Y₂O₃ of 7wt% to 20wt%.

Note that, as the ceramic for forming the coating layer 75, ZrO₂ ceramic obtained by partially stabilizing a solid solution of Y₂O₃ may be used, as described above, or ZrO₂ ceramic obtained by stabilizing or partially stabilizing a solid solution of at least one of MgO, CaO, and Y₂O₃ may be used.

In this way, it is possible to form the coating layer 75 that improves the absorption properties for absorbing the energy of sunlight and that has high thermal barrier properties, compared with metals. Further, compared with coating layers made of other materials, it is possible to increase the temperature difference between a surface of the coating layer 75 irradiated with sunlight and a surface of the pipe main body 74 that is in contact with compressed air, so that more sunlight can be reflected from the reflecting mirrors H to the light-incident part 73 than in conventional technologies, and thus the heat-receiving section 7 provided on the top of the tower T can be reduced in size and improved in performance.

As shown in FIG. 4, the turbulators 76 are provided on an inner circumferential surface of the pipe main body 74 and facilitate heat exchange between the pipe main body 74 and air.
The turbulators 76 protrude inward from the inner circumferential surface of the pipe main body 74, produce turbulence in the airflow in the pipe main body 74, and increase the area for heat exchange between the pipe main body 74 and air.

Note that, for the turbulators 76, a known configuration such as that in which they extend from the inner circumferential surface of the pipe main body 74 in a spiral manner can be used; the configuration thereof is not particularly limited. Also, the duration of contact of fluid with the inner surface of the pipe main body may be made longer by providing concave portions on the outer surface (convex portions on the inner surface) by pressing from the outer surface of the pipe, or by providing, instead of turbulators, spiral fins on the inner surface.

Next, power generation in the thus-configured solar thermal power generation facility 1 will be described.
An outline of power generation in the solar thermal power generation facility 1 will be described first, and the operation of the thermal receiver 7, which is a feature of this embodiment, will be described thereafter.

As shown in FIG. 1, sunlight is incident on the reflecting mirrors H disposed around the tower T and is reflected by the reflecting mirrors H toward the thermal receiver 7 disposed on the tower T.
Note that a known method can be used to control the sunlight reflection directions of the reflecting mirrors H; the method is not particularly limited.

As shown in FIG. 2, the reflected sunlight heats air compressed by the compressor 3, in the thermal receiver 7. The heated air is supplied to the turbine section 4 through a pipe 10E, and the turbine section 4 converts heat energy etc. of the heated air into a rotary drive force.
The air discharged from the turbine section 4 flows into the heat exchanger 6 through the pipe 10C, is used to heat air compressed by the compressor 3, and is then discharged to the outside.

The turbine section 4 transfers the rotary drive force to the rotary shaft 8, and the rotary shaft 8 rotationally drives the power generator 5 and the compressor 3.
The power generator 5 is rotationally driven by the rotary shaft 8 to generate power and supplies the power to the outside.

On the other hand, the compressor 3 rotationally driven by the rotary shaft 8 sucks air in from the outside and compresses it. The compressed air flows from the compressor 3 into the pipe 10A and the pipe 10B.
The compressed air flowing into the pipe 10A flows into the turbine section 4 together with air flowing through the pipe 10E.

The compressed air flowing into the pipe 10B is heated in the heat exchanger 6 by the air discharged from the turbine section 4. The heated compressed air flows into the thermal receiver 7 through the pipe 10D and is further heated in the thermal receiver 7.

Next, heating of compressed air in the thermal receiver 7, which is a feature of this embodiment, will be described.

As shown in FIG. 3, sunlight enters the housing 71 from the light-incident part 73 and is repeatedly reflected at the inner circumferential surface of the housing 71. The sunlight entering the housing 71 and the reflected sunlight are incident on the coating layer 75 of the heat-receiving pipe 72, as shown in FIGS. 3 and 4, and energy of the sunlight is converted into heat.

The outer circumferential surface of the coating layer 75 on which the sunlight is incident is heated to a high temperature by the incident sunlight. The temperature of the outer circumferential surface of the coating layer 75 is transferred toward the center of the heat-receiving pipe 72 according to the heat transfer coefficients of the coating layer 75 and the pipe main body 74.

The heat transferred to the inner circumferential surface of the pipe main body 74 is absorbed by compressed air flowing in the pipe main body 74 and is used to heat the compressed air.
At this time, since the flow of the compressed air is diffused by the turbulators 76 and the heat transfer area is expanded, the compressed air is heated with high efficiency, compared with a case where the turbulators 76 are not provided.

On the other hand, a temperature difference, a so-called heat drop, is produced between the outer circumferential surface of the coating layer 75 and the inner circumferential surface of the pipe main body 74. Since the coating layer 75 is TBC, compared with layers made of other materials, the heat-resistant temperature thereof is high (for example, approximately 850 °C or more and approximately 1,320 °C or less, more preferably, approximately 1,150 °C or more and approximately 1,320 °C or less), and has a thermal barrier property, thereby producing a large heat drop.
As a result, the heat flux density transferred from the outer circumferential surface of the coating layer 75 to the inner circumferential surface of the pipe main body 74 becomes high, so that compressed air flowing in the pipe main body 74 can be efficiently heated.

According to the above-described configuration, by providing the coating layer 75, it is possible to increase the temperature difference, in other words, the heat drop, between the surface irradiated with sunlight and the surface in contact with fluid such as air. Therefore, the air can be efficiently heated to a high temperature. Thus, the power generation efficiency of the solar thermal power generation facility 1 of this embodiment can be improved.

In other words, since the coating layer 75 having a higher heat-resistant temperature than other members made of metal etc. is provided, the surface irradiated with sunlight can be heated to a high temperature. As a result, it is possible to increase the above-described temperature difference to increase the heat flux density from the surface irradiated with sunlight to the surface in contact with air and to efficiently heat the air to a high temperature.

On the other hand, compared with a case where the coating layer 75 is not provided, it is possible to suppress the heat resistance required for a member constituting the pipe main body 74. Therefore, the pipe main body 74 can be formed by using a heat-resistant alloy, which is highly resistant to thermal shock compared with porous ceramic etc. As a result, compared with a case where porous ceramic or the like is used, it is possible to enhance the thermal shock resistance of the thermal receiver 7 of the solar thermal power generation facility 1 of this embodiment and to reduce the production cost thereof.

Specifically, because the surface of the coating layer 75 is irradiated with sunlight, the temperature is the highest thereat, and decreases therefrom in the contact surface between the coating layer 75 and the pipe main body 74 and the contact surface between the pipe main body 74 and fluid in that order. Therefore, compared with a case where the coating layer is not provided and the surface irradiated with sunlight has an identical temperature, it is possible to reduce the temperature of the pipe main body 74, thereby suppressing the heat resistance required for the member constituting the pipe main body 74.

Since sunlight guided to the inside of the housing 71 is reflected at the inner circumferential surface of the housing 71, the heat-receiving pipe 72 is irradiated with the sunlight from all directions. Therefore, air can be efficiently heated, compared with a case where the heat-receiving pipe 72 is irradiated with sunlight only from a predetermined direction.
On the other hand, since the heat-receiving pipe 72 is irradiated with sunlight from all directions, it is possible to suppress the occurrence of a temperature difference along the circumferential direction of the heat-receiving pipe 72 and to suppress damage to the heat-receiving pipe 72.

### Second Embodiment

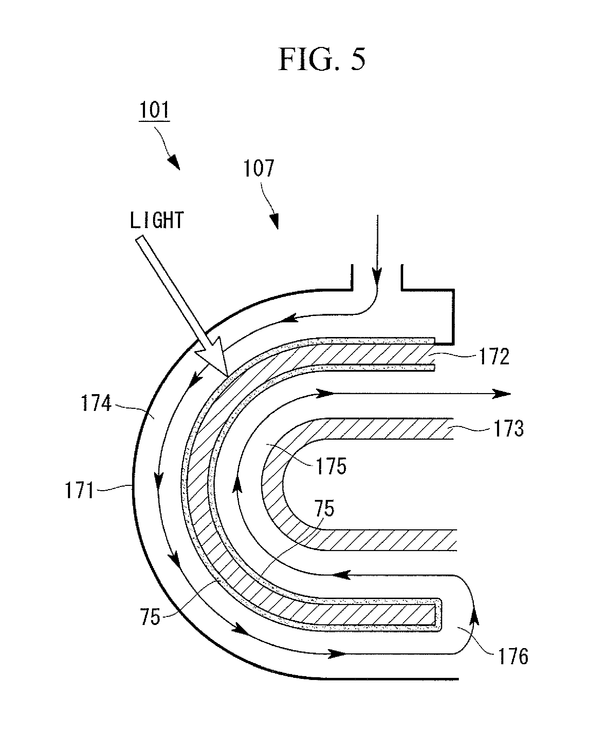

Next, a second embodiment of the present invention will be described with reference to FIGS. 5 and 6.
In a solar thermal power generation facility of this embodiment, the basic configuration is the same as that of the first embodiment but the configuration of a thermal receiver is different from that of the first embodiment. Therefore, in this embodiment, a description will be given of only the thermal receiver and its surroundings by using FIGS. 5 and 6, and a description of the other components etc. will be omitted.
FIG. 5 is a schematic diagram for explaining the configuration of the thermal receiver in the solar thermal power generation facility according to this embodiment.
Note that identical reference numerals are assigned to the same components as those of the first embodiment, and a description thereof will be omitted.

As in the first embodiment, a thermal receiver 107 of a solar thermal power generation facility 101 of this embodiment is disposed at a location in the tower T where sunlight is collected, converts energy of irradiating sunlight into heat, and heats air (see FIG. 1).
As shown in FIG. 5, the thermal receiver 107 includes a transparent housing 171, an outer wall (heat-receiving section) 172, and an inner wall 173.

The transparent housing 171 is a cylindrical container that is made of a sunlight-transmissive transparent material such as silica glass and one end of which is closed. Further, as shown in FIG. 5, the transparent housing 171 is also a container forming the outer shape of the thermal receiver 107 and accommodating the outer wall 172, the inner wall 173, and the like.

The outer wall 172 is a cylindrical container that is made of a material having heat resistance and thermal shock resistance, such as a heat-resistant alloy, and one end of which is closed. Further, as shown in FIG. 5, a first flow path 174 is formed between the outer wall 172 and the transparent housing 171, and a second flow path 175 is formed between the outer wall 172 and the inner wall 173.

As shown in FIG. 5, the coating layer 75 is provided on surfaces of the outer wall 172.
Note that the coating layer 75 may be provided on a surface of the outer wall 172 that faces the transparent housing 171 and on a surface thereof that faces the inner wall 173, as shown in FIG. 5, or may be provided only on the surface thereof that faces the transparent housing 171; the location thereof is not particularly limited.

The first flow path 174 is a flow path in which compressed air supplied from the pipe 10D flows, and forms a compressed-air flow path in the thermal receiver 107 together with the second flow path 175.
The first flow path 174 is connected to the second flow path 175 via a communicating hole 176 formed on the outer wall 172 such that the compressed air can flow therethrough.

The second flow path 175 is a flow path into which the heated compressed air flows from the first flow path 174, and forms the compressed-air flow path in the thermal receiver 107 together with the first flow path 174.
The second flow path 175 is connected to the pipe 10E such that the compressed air can flow therethrough.

The inner wall 173 is a cylindrical container that is made of a material having heat resistance and thermal shock resistance, such as a heat-resistant alloy, and one end of which is closed. Further, as shown in FIG. 5, the inner wall 173 is disposed inside the outer wall 172, and the second flow path 175 is formed between the inner wall 173 and the outer wall 172.

The operation of the thus-configured thermal receiver 107 will be described.
Note that since the outline of power generation in the solar thermal power generation facility 101 is the same as that of the first embodiment, a description thereof will be omitted.

As shown in FIG. 5, sunlight passes through the transparent housing 171 and irradiates the coating layer 75 to heat it. Compressed air supplied from the pipe 10D flows into the first flow path 174 adjacent to the coating layer 75 and is heated by absorbing the heat of the coating layer 75.
On the other hand, the heat of the coating layer 75 is transferred to the outer wall 172, thus heating the outer wall 172.

After the compressed air is heated in the first flow path 174, it flows into the second flow path 175 between the outer wall 172 and the inner wall 173. The compressed air is further heated by absorbing the heat of the outer wall 172 while flowing in the second flow path 175 adjacent to the outer wall 172.
The compressed air further heated in the second flow path 175 flows into the pipe 10E and is guided to the turbine section 4.

According to the above-described configuration, since the compressed air flows in the first flow path 174 and the second flow path 175 in that order, it is possible to heat the compressed air more efficiently than in a case where it flows in reverse order, for example.
The compressed air is immediately heated by absorbing the heat from the heated coating layer 75 while flowing in the first flow path 174, and is further heated by absorbing the heat from the outer wall 172, which has a lower temperature than the coating layer 75 but has a higher temperature than the compressed air, while flowing in the second flow path 175. In this way, the compressed air is heated in two steps, thereby efficiently heating the compressed air.

FIG. 6 is a sectional view for explaining another embodiment of the thermal receiver shown in FIG. 5.
Note that, as in the above-described embodiment, the thermal receiver 107 may be formed by using the cylindrically-formed transparent container 171 one end of which is closed, the outer container 172, and the inner container 173; or, as shown in FIG. 6, a thermal receiver 207 may be formed by using a cylindrically-formed transparent container 271 and an outer container 272, so as to form the first flow path 174 and the second flow path 175; the configuration thereof is not particularly limited.

### {Reference Signs List}

- 1, 101: solar thermal power generation facility
- 3: compressor
- 4: turbine section
- 5: power generator
- 7, 107, 207: thermal receiver (solar thermal receiver)
- 71: housing
- 72: heat-receiving pipe (heat-receiving section)
- 73: light-incident part
- 74: pipe main body (heat-receiving section)
- 75: coating layer
- 171, 271: transparent housing
- 172, 272: outer wall (heat-receiving section)
- H: reflecting mirror (reflecting section)

## Claims

1. A solar thermal receiver that receives solar radiation to heat fluid, comprising:
a heat-receiving section that is made of metal and that constitutes a flow path in which at least the fluid flows; and
a coating layer that is disposed on at least a surface of an area of the heat-receiving section irradiated with the sunlight, that absorbs energy of the sunlight, and that has heat resistance.

2. A solar thermal receiver according to claim 1, wherein the coating layer is made of ceramic thermally sprayed on the heat-receiving section.

3. A solar thermal receiver according to claim 2, wherein the coating layer is provided on a heat-receiving portion irradiated with the sunlight.

4. A solar thermal receiver according to claim 2, wherein the ceramic is ZrO₂ ceramic obtained by stabilizing or partially stabilizing a solid solution of at least one of MgO, CaO, and Y₂O₃.

5. A solar thermal receiver according to claim 2, wherein the ceramic is ZrO₂ ceramic obtained by partially stabilizing a solid solution of Y₂O_{3.}

6. A solar thermal receiver, wherein:
a heat-receiving section according to claim 1 is a heat-receiving pipe having a flow path in which the fluid flows;
a coating layer according to one of claims 1 to 5 is disposed on an outer circumferential surface of the heat-receiving pipe; and
the heat-receiving pipe has a light-incident part for guiding the sunlight to the inside thereof and is accommodated in a housing whose inner circumferential surface reflects the sunlight.

7. A solar thermal receiver comprising a transparent housing that accommodates a heat-receiving section according to claim 1 and through which the sunlight passes, wherein:
a coating layer according to one of claims 1 to 5 is disposed on at least a surface of the heat-receiving section that faces the transparent housing;
the flow path has a first flow path in which the fluid flows, between the heat-receiving section and the transparent housing, and a second flow path in which the fluid flows, at an opposite side of the heat-receiving section from the first flow path; and
the fluid flows in the first flow path and the second flow path.

8. A solar thermal power generation facility comprising:
a reflecting section that reflects sunlight;
a compressor that compresses fluid;
a solar thermal receiver according to one of claims 1 to 7 that receives the sunlight reflected by the reflecting section to heat the fluid compressed by the compressor;
a turbine section that extracts a rotary drive force from the fluid heated by the solar thermal receiver; and
a power generator that is rotationally driven by the turbine section.
